# EUROPEAN PATENT APPLICATION

(11) **EP 4 328 825 A1**
(43) Date of publication of application: **28.02.2024**
(21) Application number: 22790909.0
(22) Date of filing: 12.04.2022
(51) Int. Cl.: G06Q 10/08

(54) **WAREHOUSING SYSTEM ATTRIBUTE PRE-MODIFICATION METHOD AND APPARATUS, AND ELECTRONIC DEVICE AND STORAGE MEDIUM**

(30) Priority: 19.04.2021 CN 202110419810
(71) Applicant: Shenzhen Kubo Software Co., Ltd, Shenzhen, Guangdong 518100 (CN)
(72) Inventor: ZHOU, Hongxia, Shenzhen, Guangdong 518100 (CN)
(74) Representative: Gulde & Partner
(86) International application number: PCT/CN2022/086451
(87) International publication number: WO 2022/222800

(57) **Abstract**

Embodiments of this application provide a method and apparatus for pre-modifying a property of a warehousing system, an electronic device, and a storage medium. In response to a property pre-modification instruction, according to a material storage area mapping model, whether a storage area property of a storage area matches a material property of a material in the storage area is detected. The property pre-modification instruction is used for testing whether the storage area property of the storage area or the material property of the material in the storage area is modifiable. If the storage area property of the storage area matches the material property of the material in the storage area, property-modification-confirmation information is generated. The property-modification-confirmation information represents that the storage area property of the storage area or the material property of the material in the storage area is modifiable. Before the storage area property or the material property in the warehousing system is modified, it is first detected through the property pre-modification instruction whether the storage area property of the storage area matches the material property of the material in the storage area, so that the safety and effectiveness of the property modification can be determined, thereby avoiding a mismatch between the storage area property and the material property.

## Description

### CROSS-REFERENCE TO RELATED APPLICATIONS

This application claims priority to Chinese Patent Application No. 202110419810.0, filed with the China National Intellectual Property Administration on April 19, 2021 and entitled "METHOD AND APPARATUS FOR PRE-MODIFYING PROPERTY OF WAREHOUSING SYSTEM, ELECTRONIC DEVICE, AND STORAGE MEDIUM", which is incorporated herein by reference in its entirety.

### TECHNICAL FIELD

This application relates to the technical field of intelligent warehousing, and in particular, to a method and apparatus for pre-modifying a property of a warehousing system, an electronic device, and a storage medium.

### BACKGROUND

This part is intended to provide a background or a context for implementations of this application stated in the claims. The description, although included in this part, is not considered as the prior art.

A warehousing system based on a warehousing robot is an intelligent operating system, implements automatic retrieval and storage of goods through system instructions, and may also operate 24 hours a day without interruption, which replaces manual management and operation, improves the efficiency of warehousing, and has been widely applied and favored.

In the daily operation of the warehousing system, different storage areas are generally configured for different materials to be stored, so as to realize regional management of the storage areas with different storage conditions. According to specific business requirements, when the warehousing system needs to change the storage use of the storage area or adjust item information of the material, a common practice in the related art is to take all materials out of the storage areas, re-adjust properties, and then store the materials in a storage area.

However, in an actual operation process, after the storage area property or the material property is modified, a problem of whether the storage area matches the corresponding stored materials exists. If the modified storage area property or material property cannot satisfy the matching requirements, readjustment is required, which results in increased operating steps, reduced efficiency, and an increased error rate, and reduces the overall operating efficiency and stability of the warehousing system.

### SUMMARY

This application provides a method and apparatus for pre-modifying a property of a warehousing system, an electronic device, and a storage medium, to solve problems of increased operating steps, reduced efficiency, and an increased error rate in the process of modifying a storage area property or a material property.

According to a first aspect of embodiments of this application, this application provides a method for pre-modifying a property of a warehousing system. The method includes:
detecting, according to a material storage area mapping model, whether a storage area property of a storage area matches a material property of a material in the storage area in response to a property pre-modification instruction, where the property pre-modification instruction is configured to test whether the storage area property of the storage area or the material property of the material in the storage area is modifiable; and generating property-modification-confirmation information when the storage area property of the storage area matches the material property of the material in the storage area, where the property-modification-confirmation information represents that the storage area property of the storage area or the material property of the material in the storage area is modifiable.

In a possible implementation, the material storage area mapping model includes matching identifier mapping, and the detecting, in response to a property pre-modification instruction, whether a storage area property of a storage area matches a material property of a material in the storage area includes: acquiring a storage area property of a target storage area corresponding to the property pre-modification instruction and a material property of a material in the target storage area; determining a first identifier corresponding to the storage area property of the target storage area and a second identifier corresponding to the material property of the material in the target storage area; and determining that the storage area property of the target storage area and the material property of the material in the target storage area are in a first matching relationship when the first identifier and the second identifier satisfy an identifier mapping relationship indicated by predetermined matching identifier mapping, where the matching identifier mapping is configured to represent an identifier mapping relationship between the storage area property and the material property that match each other, and the first matching relationship represents that the storage area property of the target storage area matches the material property of the material in the target storage area.

In a possible implementation, the material storage area mapping model includes matching degree mapping, and the detecting, in response to a property pre-modification instruction, whether a storage area property of a target storage area matches a material property of a material in the target storage area includes: acquiring a storage area property of a target storage area corresponding to the property pre-modification instruction and a material property of a material in the target storage area; determining a matching degree between the storage area property of the target storage area and the material property of the material in the target storage area according to the matching degree mapping; and determining that the storage area property of the target storage area and the material property of the material in the target storage area are in a first matching relationship when the matching degree is greater than a preset threshold, where the first matching relationship represents that the storage area property of the target storage area matches the material property of the material in the target storage area.

In a possible implementation, the method further includes: detecting whether the material property of the material stored in the target storage area has a matching storage area if the storage area property of the target storage area and the material property of the material in the target storage area are not in the first matching relationship; and determining that the storage area property of the target storage area and the material property of the material in the target storage area are in a second matching relationship when the matching storage area exists, where the second matching relationship represents that the material property of the material in the target storage area matches a storage area property of a non-target storage area.

In a possible implementation, after the determining that the storage area property of the target storage area and the material property of the material in the target storage area are in the second matching relationship, the method further includes: acquiring identification information of the matching storage area and identification information of the material in the target storage area; and generating carrying indication information according to the identification information of the matching storage area and the identification information of the material in the target storage area, where the carrying indication information is configured to indicate a warehousing robot to carry the material in the target storage area to the matching storage area.

In a possible implementation, the method further includes: transmitting the carrying indication information to a terminal device.

In a possible implementation, the method further includes: acquiring configuration information, where the configuration information is configured to represent storage conditions corresponding to materials with different item features; and constructing or updating the material storage area mapping model according to the configuration information.

In a possible implementation, the method further includes: acquiring material-quality-monitoring information, where the material-quality-monitoring information is used for representing a deterioration status of the material under a storage condition of the material; and determining to construct or update the material inventory mapping model according to the material-quality-monitoring information.

In a possible implementation, the storage area property includes at least one of a storage temperature, a storage humidity, and storage tightness; and the material property includes at least one of an item type, an item quantity, an item material, and an item shelf life.

According to a second aspect of the embodiments of this application, this application provides an apparatus for pre-modifying a property of a warehousing system. The apparatus includes:
a detection module, configured to detect, according to a material storage area mapping model, whether a storage area property of a storage area matches a material property of a material in the storage area in response to a property pre-modification instruction, where the property pre-modification instruction is configured to test whether the storage area property of the storage area or the material property of the material in the storage area is modifiable; and
a generation module, configured to generate property-modification-confirmation information if the storage area property of the storage area matches the material property of the material in the storage area, where the property-modification-confirmation information represents that the storage area property of the storage area or the material property of the material in the storage area is modifiable.

In a possible implementation, the material storage area mapping model includes matching identifier mapping. The detection module is specifically configured to: acquire a storage area property of a target storage area corresponding to the property pre-modification instruction and a material property of a material in the target storage area; determine a first identifier corresponding to the storage area property of the target storage area and a second identifier corresponding to the material property of the material in the target storage area; and determine that the storage area property of the target storage area and the material property of the material in the target storage area are in a first matching relationship if the first identifier and the second identifier satisfy an identifier mapping relationship indicated by predetermined matching identifier mapping, where the matching identifier mapping is used for representing an identifier mapping relationship between the storage area property and the material property that match each other, and the first matching relationship represents that the storage area property of the target storage area matches the material property of the material in the target storage area.

In a possible implementation, the material storage area mapping model includes matching degree mapping. The detection module is specifically configured to: acquire a storage area property of a target storage area corresponding to the property pre-modification instruction and a material property of a material in the target storage area; determine a matching degree between the storage area property of the target storage area and the material property of the material in the target storage area according to the matching degree mapping; and determine that the storage area property of the target storage area and the material property of the material in the target storage area are in a first matching relationship if the matching degree is greater than a preset threshold, where the first matching relationship represents that the storage area property of the target storage area matches the material property of the material in the target storage area.

In a possible implementation, the detection module is further configured to: detect whether the material property of the material stored in the target storage area has a matching storage area if the storage area property of the target storage area and the material property of the material in the target storage area are not in the first matching relationship; and determine that the storage area property of the target storage area and the material property of the material in the target storage area are in a second matching relationship if the matching storage area exists, where the second matching relationship represents that the material property of the material in the target storage area matches a storage area property of a non-target storage area.

In a possible implementation, after the determining that the storage area property of the target storage area and the material property of the material in the target storage area are in the second matching relationship, the generation module is further configured to: acquire identification information of the matching storage area and identification information of the material in the target storage area; and generate carrying indication information according to the identification information of the matching storage area and the identification information of the material in the target storage area, where the carrying indication information indicates that a warehousing robot should carry the material in the target storage area to the matching storage area.

In a possible implementation, the apparatus for pre-modifying a property of a warehousing system further includes: a transmission module, configured to transmit the carrying indication information to a terminal device.

In a possible implementation, the detection module is further configured to: acquire configuration information, where the configuration information is used for representing storage conditions corresponding to materials with different item features; and construct or update the material storage area mapping model according to the configuration information.

In a possible implementation, the detection module is further configured to: acquire material-quality-monitoring information, where the material-quality-monitoring information is used for representing a deterioration status of the material under a storage condition of the material; and determine to construct or update the material inventory mapping model according to the material-quality-monitoring information.

In a possible implementation, the storage area property includes at least one of a storage temperature, a storage humidity, and storage tightness; and the material property includes at least one of an item type, an item quantity, an item material, and an item shelf life.

According to a third aspect of the embodiments of this application, this application provides an electronic device, including: a memory, a processor, and a computer program, where
the computer program is stored in the memory, and configured to be executed by the processor to implement the method for pre-modifying a property of a warehousing system according to any of the first aspect of the embodiments of this application.

In a possible implementation, the electronic device is a warehousing system server.

According to a fourth aspect of the embodiments of this application, this application provides a computer-readable storage medium. The computer-readable storage medium stores computer-executable instructions, the computer-executable instructions, when executed by a processor, used for implementing the method for pre-modifying a property of a warehousing system according to any of the first aspect of the embodiments of this application.

According to a fifth aspect, an embodiment of this application provides a computer program product, including a computer program. The computer program, when executed by a processor, implements the method for pre-modifying a property of a warehousing system according to the first aspect and various possible designs of the first aspect.

According to the method and apparatus for pre-modifying a property of a warehousing system, the electronic device, and the storage medium provided in this application, in response to the property pre-modification instruction, it is detected, according to the material storage area mapping model, whether the storage area property of the storage area matches the material property of the material in the storage area. The property pre-modification instruction is used for testing whether the storage area property of the storage area or the material property of the material in the storage area is modifiable. If the storage area property of the storage area matches the material property of the material in the storage area, property-modification-confirmation information is generated. The property-modification-confirmation information represents that the storage area property of the storage area or the material property of the material in the storage area is modifiable. Before the storage area property or the material property in the warehousing system is modified, it is first detected through the property pre-modification instruction whether the storage area property of the storage area matches the material property of the material in the storage area. After it is determined that the storage area property of the storage area matches the material property of the material in the storage area, the property-modification-confirmation information is generated. The warehousing system may determine the safety and effectiveness of the modification according to the property-modification-confirmation information, thereby avoiding the mismatch between the storage area property and the material property after the storage area property or the material property is modified. In this way, the property modification efficiency is improved, the error rate is reduced, and the overall operating efficiency and stability of the warehousing system are improved.

### BRIEF DESCRIPTION OF THE DRAWINGS

Accompanying drawings herein are incorporated into the specification and constitute a part of this specification, show embodiments that conform to this application, and are used for explaining the principle of this application together with this specification.
FIG. 1 is a diagram of an application scenario of a method for pre-modifying a property of a warehousing system according to an embodiment of this application.
FIG. 2 is a flowchart of a method for pre-modifying a property of a warehousing system according to an embodiment of this application.
FIG. 3 is a schematic diagram of a first matching relationship according to an embodiment of this application.
FIG. 4 is a flowchart of a method for pre-modifying a property of a warehousing system according to another embodiment of this application.
FIG. 5 is a schematic diagram of a second matching relationship according to an embodiment of this application.
FIG. 6 is a schematic structural diagram of an apparatus for pre-modifying a property of a warehousing system according to an embodiment of this application.
FIG. 7 is a schematic diagram of an electronic device according to an embodiment of this application.

Specific embodiments of this application are shown in the above accompanying drawings, which are to be described in more detail later. These accompanying drawings and text description are not intended to limit the scope of the concept of this application in any way, but to describe the concept of this application for those skilled in the art with reference to specific embodiments.

### DETAILED DESCRIPTION

Exemplary embodiments are to be described herein in detail, and examples thereof are represented in the accompanying drawings. When the following description relates to the accompanying drawings, unless otherwise stated, the same reference numeral in different accompanying drawings represents the same or similar elements. Implementations described in the following exemplary embodiments do not represent all implementations consistent with this application. On the contrary, the implementations are merely examples of an apparatus and a method which are consistent with some aspects of this application described in detail in the attached claims.

Application scenarios of the embodiments of this application are described below.

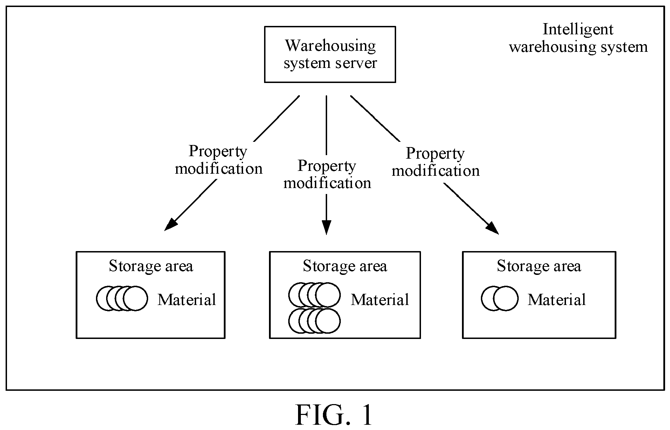

FIG. 1 is a diagram of an application scenario of a method for pre-modifying a property of a warehousing system according to an embodiment of this application. As shown in FIG. 1, the method for pre-modifying a property of a warehousing system provided in the embodiment of this application may be applied to a scenario of an intelligent warehousing system. The intelligent warehousing system is provided with a warehouse dispatching center for material dispatching and management. The dispatching and management function of the warehouse dispatching center is implemented by a warehousing system server. Further, the intelligent warehousing system includes a plurality of storage areas configured to store materials. Different storage areas are usually configured to store different materials, so as to realize regional management of the storage areas with different storage conditions. Each of the storage areas has a corresponding storage area property. The storage area property is, for example, a storage condition of the storage area, a location of the storage area, and the like. The material stored in the storage area is, for example, a material box for storing goods. The material corresponds to a material property, such as a quantity of material boxes, a type of goods placed in the material box, and the like. The warehousing system server can modify the properties of the storage area and the material in the system after receiving a user instruction, so that the properties of the storage area and the material satisfy specific business requirements.

In the related art, when a user needs to modify the storage area property or the material property, a common practice is to take all materials out of relevant storage areas, readjust the storage area property or the material property, then determine a storage area matching the previously retrieved materials according to the modified storage area property or material property, and then store the materials in the storage area again, so as to complete the process of property modification.

However, in an actual operation process, after the storage area property or the material property is modified, a problem of whether the storage area matches the corresponding stored materials exists, which causes the following two problems.

First, since it cannot be ensured in advance that after the storage area property or the material property is modified, the materials previously taken out from the relevant storage areas certainly have a matching storage area. Therefore, the materials previously taken out from the relevant storage areas cannot be stored, resulting in incorrect material dispatching. Then the incorrect material dispatching can be corrected only by withdrawing the previous property modification instruction or modifying the property again until the storage area matching the previously retrieved materials is found.

Second, after the storage area property or the material property is modified, if the modified storage area property still matches the material previously stored in the storage area, or the modified material property still matches the storage area in which the material is previously stored, the materials previously taken out from the relevant storage areas are to be stored into an original storage area, which is equivalent to a vain taking/storage operation.

The foregoing two problems lead to increased operating steps, reduced efficiency, and an increased error rate, and reduce the overall operating efficiency and stability of the warehousing system.

Therefore, there is an urgent need for a method for pre-modifying a property of a warehousing system before modifying the storage area property or the material property, so as to ensure safety and effectiveness of the property modification instruction, thereby avoiding the above problems.

The technical solutions of this application and how to resolve the foregoing technical problems according to the technical solutions of this application are described in detail below by using specific embodiments. Several specific embodiments may be combined with each other below, and the same or similar concepts or processes may not be detailed in certain embodiments. The embodiments of this application are to be described below with reference to the accompanying drawings.

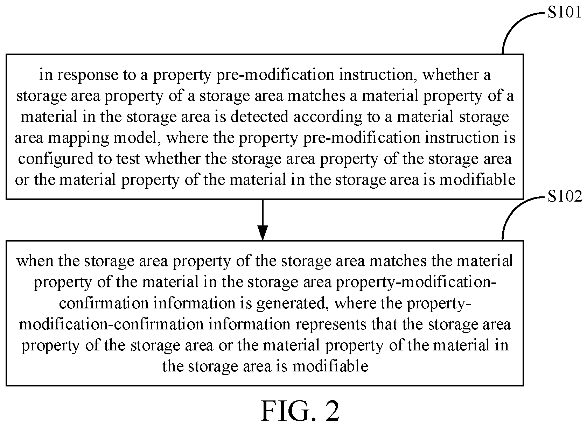

FIG. 2 is a flowchart of a method for pre-modifying a property of a warehousing system according to an embodiment of this application, applicable to a warehousing system server. As shown in FIG. 2, the method for pre-modifying a property of a warehousing system provided in this embodiment includes the following operations.

In block S101: in response to a property pre-modification instruction, whether a storage area property of a storage area matches a material property of a material in the storage area is detected according to a material storage area mapping model, where the property pre-modification instruction is configured to test whether the storage area property of the storage area or the material property of the material in the storage area is modifiable.

For example, the property pre-modification instruction may be transmitted by a terminal device communicating with the warehousing system server, or other server communicating with the warehousing system server, or may be generated by the warehousing system server. Specifically, for example, the terminal device transmits a property modification instruction to the warehousing system server to modify the storage area property of the storage area and/or the material property of the material in the intelligent warehousing system. After receiving the property modification instruction, the warehousing system server generates the property pre-modification instruction and makes a response, and then determines, according to a result of the response to the property pre-modification instruction, whether to execute the property modification instruction.

Further, specifically, the property pre-modification instruction corresponds to one storage area or one material. The property pre-modification instruction is used for testing whether the storage area property of the storage area corresponding to the property pre-modification instruction or the material property of the corresponding material can be modified. Specifically, whether "the storage area property of the corresponding storage area" or "the material property of the corresponding material" can be modified herein means that whether the storage area property matches the material property of the material stored in the corresponding storage area in the warehouse dispatching center after the storage area property of the storage area corresponding to the property pre-modification instruction or the material property of the material corresponding to the property pre-modification instruction is modified. If the storage area property or the material property of the material in the storage area is modified, the material in the storage area is moved in any case without further changing other storage area properties or material properties, a storage area matching the material in the storage area cannot be found, that is, the storage area property does not match the material property of the material stored in the corresponding storage area. That is to say, the storage area property of the storage area or the material property of the material in the storage area cannot be modified. On the contrary, the storage area property matches the material property of the material stored in the corresponding storage area. That is to say, the storage area property of the storage area or the material property of the material in the storage area can be modified.

The material matches the storage area. That is to say, the material property of the material matches the storage area property of the storage area. For example, the storage area property includes at least one of a storage temperature, a storage humidity, and storage tightness; and the material property includes at least one of an item type, an item quantity, an item material, and an item shelf life. The storage area property matches the material property. For example, the storage temperature of the storage area can be used for a specific item type of material to be stored. More specifically, for example, if a storage temperature of a storage area A is 10-20 degree Celsius, a type of a material a is a chilled fresh product, and a type of a material b is an electronic product, the storage temperature of the storage area A matches the item type of the material b. That is to say, the storage area A matches the material b.

It may be detected through the material storage area mapping model whether the storage area property of the storage area matches the material property of the material in the storage area. The material storage area mapping model is a mathematical model configured to represent a matching relationship between the storage area property and the material property. The material storage area mapping model may be obtained by receiving configuration information inputted by the user. A specific implementation of the configuration information is, for example, data including the storage conditions corresponding to the materials with different item features. More specifically, for example, a Class A item is stored at a temperature condition a, and a Class B item is stored under a humidity condition b.

In a possible implementation, the material storage area mapping model includes matching identifier mapping. The matching identifier mapping is configured to represent an identifier mapping relationship between the storage area property and the material property that match each other. The detecting, through a material storage area mapping model, whether a storage area property of a storage area matches a material property of a material in the storage area includes the following operations.

In block S1011: a storage area property of a target storage area corresponding to the property pre-modification instruction and a material property of a material in the target storage area are acquired.

In block S1012: a first identifier corresponding to the storage area property of the target storage area and a second identifier corresponding to the material property of the material in the target storage area are determined.

In block S1013: when the first identifier and the second identifier match an identifier mapping relationship indicated by predetermined matching identifier mapping the storage area property of the target storage area and the material property of the material in the target storage area being in a first matching relationship is determined, where the first matching relationship represents that the storage area property of the target storage area matches the material property of the material in the target storage area.

For example, the target storage area is the storage area corresponding to the property pre-modification instruction, or the storage area where the corresponding material in the property pre-modification instruction is located. According to a specific content of the property pre-modification instruction, the property pre-modification instruction includes identification information that represents the target storage area, or identification information that represents the target material. The corresponding target storage area or the target material may be determined according to the identification information that represents the target storage area or the target material or the identification information that represents the target material. Further, the storage area property of the target storage area and the material property of the material in the target storage area are determined through preset data recording the storage area properties corresponding to different storage areas and the material properties corresponding to different materials.

Further, the different storage area properties and material properties respectively have corresponding identifiers. For example, the storage area property of the target storage area corresponds to a first identifier, and the material property of the material in the target storage area corresponds to a second identifier. It may be determined, according to an identifier mapping relationship, whether the first identifier matches the second identifier. In a possible implementation, the identifier mapping relationship is a function including two input parameters and one output quantity. The first identifier and the second identifier are inputted into the function corresponding to the identifier mapping relationship as the input parameters, so as to obtain an output quantity in the form of a Boolean value. For example, if the first identifier matches the second identifier, the output value is 1, and if the first identifier does not match the second identifier, the output value is 0. When the matching identifier mapping determines that the first identifier matches the second identifier, the storage area property of the target storage area and the material property of the material in the target storage area are in the first matching relationship, that is, the first identifier matches the second identifier.

In another possible implementation, the material storage area mapping model includes matching degree mapping. The matching degree mapping represents a matching degree relationship between the storage area property and the material property. The detecting, through the material storage area mapping model, whether the storage area property of the storage area matches the material property of the material in the storage area includes the following operations.

In block S1014: a storage area property of a target storage area corresponding to the property pre-modification instruction and a material property of a material in the target storage area are acquired.

In block S1015: a matching degree between the storage area property of the target storage area and the material property of the material in the target storage area are determined according to the matching degree mapping.

In block S1016: when the matching degree is greater than a preset threshold, the storage area property of the target storage area and the material property of the material in the target storage area being in a first matching relationship are determined, where the first matching relationship represents that the storage area property of the target storage area matches the material property of the material in the target storage area.

For example, in this implementation, the operation of block S1014 is the same as that of block S 1011. The matching degree mapping is a function that includes two input parameters and one output quantity. The storage area property of the target storage area and the material property of the material in the target storage area are respectively inputted into the function corresponding to the matching degree mapping as the input parameters, so as to obtain an output quantity in the form of a numerical value (such as an int or double type). The output quantity is the matching degree between the storage area property of the target storage area and the material property of the material in the target storage area. A larger output quantity leads to a higher matching degree, and a smaller output quantity leads to a lower matching degree. When the matching degree is greater than a preset threshold, the system determines that the storage area property of the target storage area and the material property of the material in the target storage area are in the first matching relationship, that is, the storage area property of the target storage area matches the material property of the material. In a possible implementation, it may be determined through a correspondence between a preset flag data and a specific matching degree whether the storage area property of the target storage area and the material property of the material in the target storage area are in the first matching relationship. Specifically, for example, three flag values {A, B, C} exist in a set composed of a plurality of preset flag values. If the matching degree obtained in the above steps is any of A, B, and C, it is determined that the storage area property of the target storage area and the material property of the material in the target storage area are in the first matching relationship. If the matching degree is D, that is, the matching degree cannot match the flag values in the set composed of the flag values, the storage area property of the target storage area and the material property of the material in the target storage area are not in the first matching relationship.

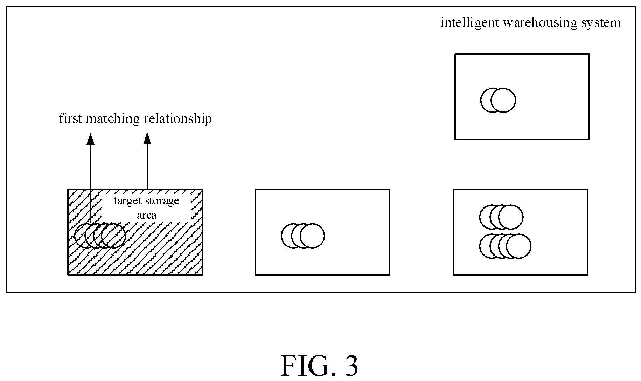

Further, for example, FIG. 3 is a schematic diagram of a first matching relationship according to an embodiment of this application. Referring to FIG. 3, in the above two implementations, when the storage area property of the target storage area and the material property of the material in the target storage area are in the first matching relationship, the target storage area still matches the material stored in the target storage area after the storage area property of the target storage area or the material property of the material in the target storage area is modified. In this case, a retrieval operation may not be performed on the material stored in the target storage area, so as to avoid a vain retrieval/storage operation and improve the efficiency of the warehousing system.

In block S102: when the storage area property of the storage area matches the material property of the material in the storage area property-modification-confirmation information is generated, where the property-modification-confirmation information represents that the storage area property of the storage area or the material property of the material in the storage area is modifiable.

For example, when it is determined through operation in block S101 that the storage area property of the pre-modified storage area corresponding to the property pre-modification instruction matches the material property of the material in the storage area, that is, in the case that the storage area property of the storage area or the material property of the material in the storage area can be modified, the property-modification-confirmation information is generated. The property-modification-confirmation information is configured to determine the effectiveness and safety of the subsequent property modification instruction. In a possible implementation, after the property-modification-confirmation information is generated, the property-modification-confirmation information is transmitted to the terminal device, to prompt the user to transmit the property modification instruction to the warehousing system server again through the terminal device. In another possible implementation, the warehousing system server directly generates the property modification instruction according to the property-modification-confirmation information, or directly modifies the storage area property of the target storage area indicated by the property pre-modification instruction, or the material property of the target material.

Since the property-modification-confirmation information is generated, which means that the safety and effectiveness of the subsequent property modification instruction are tested and confirmed, the modification of the storage area property of the storage area or the material property of the material in the storage area by the subsequent warehousing system may not cause a mismatch between the storage area and the material after the modification.

In this embodiment, it is detected, according to the material storage area mapping model, whether the storage area property of the storage area matches the material property of the material in the storage area in response to the property pre-modification instruction. The property pre-modification instruction is used for testing whether the storage area property of the storage area or the material property of the material in the storage area is modifiable. If the storage area property of the storage area matches the material property of the material in the storage area, the property-modification-confirmation information is generated. The property-modification-confirmation information represents that the storage area property of the storage area or the material property of the material in the storage area is modifiable. Before the storage area property or the material property in the warehousing system is modified, it is first detected through the property pre-modification instruction whether the storage area property of the storage area matches the material property of the material in the storage area. After it is determined that the storage area property of the storage area matches the material property of the material in the storage area, the property-modification-confirmation information is generated. The warehousing system may determine the safety of the modification according to the property-modification-confirmation information, thereby avoiding the mismatch between the storage area property and the material property after the storage area property or the material property is modified. In this way, the property modification efficiency is improved, the error rate is reduced, and the overall operating efficiency and stability of the warehousing system are improved.

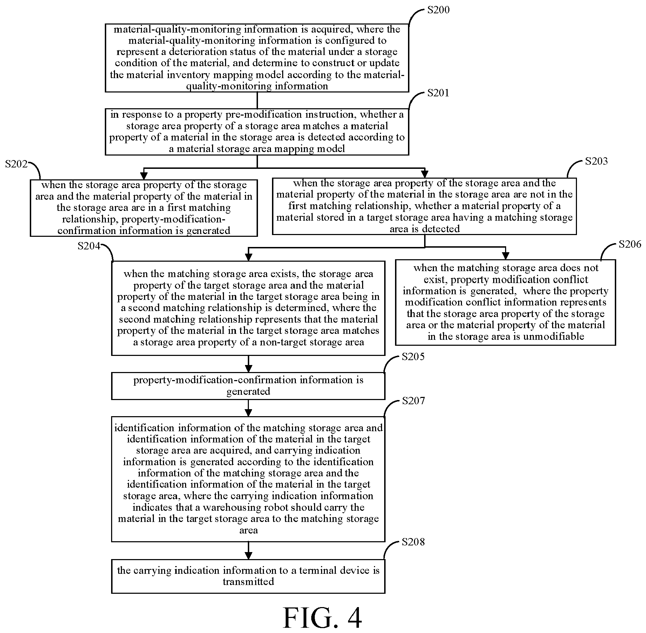

FIG. 4 is a flowchart of a method for pre-modifying a property of a warehousing system according to another embodiment of this application. As shown in FIG. 4, the method for pre-modifying a property of a warehousing system provided in this embodiment is further refinement of operation in block S 101 based on the method for pre-modifying a property of a warehousing system provided in the embodiment shown in FIG. 2, and an operation of acquiring the material storage area mapping model is added. The method for pre-modifying a property of a warehousing system provided in this embodiment includes the following operations.

In block S201: in response to a property pre-modification instruction, whether a storage area property of a storage area matches a material property of a material in the storage area is detected according to a material storage area mapping model.

In block S202: when the storage area property of the storage area and the material property of the material in the storage area are in a first matching relationship, property-modification-confirmation information is generated.

In block S203: when the storage area property of the storage area and the material property of the material in the storage area are not in the first matching relationship, whether a material property of a material stored in a target storage area having a matching storage area is detected.

For example, the target storage area is the storage area corresponding to the property pre-modification instruction, or the storage area where the material corresponding to the property pre-modification instruction is located. When the storage area property of the target storage area corresponding to the property pre-modification instruction and the material property of the material in the storage area are not in the first matching relationship, the target storage area does not match the material property of the material in the target storage area. In this case, the material in the target storage area may be moved to other storage areas matching the material, thereby solving the problem of the mismatch between the storage area and the material in the intelligent warehousing system. Specifically, it may be determined, by detecting whether the material property of the material stored in the target storage area has a matching storage area, whether the material in the target storage area may be moved to other storage areas matching the material.

In block S204: when the matching storage area exists, the storage area property of the target storage area and the material property of the material in the target storage area being in a second matching relationship is determined, where the second matching relationship represents that the material property of the material in the target storage area matches a storage area property of a non-target storage area.

After it is determined that the storage area property of the storage area and the material property of the material in the storage area are in the second matching relationship, operation S205 is performed.

In block S205: property-modification-confirmation information is generated.

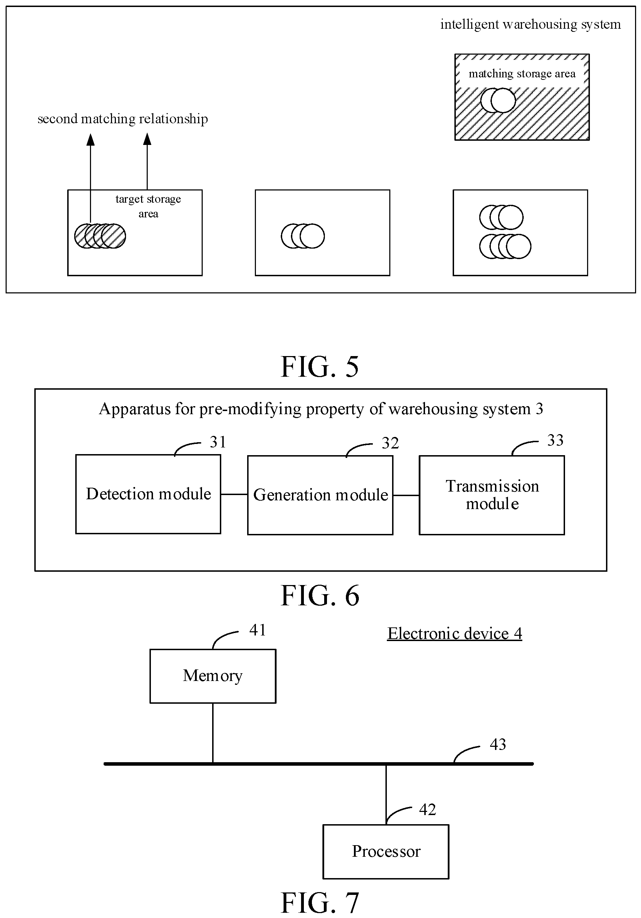

For example, FIG. 5 is a schematic diagram of a second matching relationship according to an embodiment of this application. As shown in FIG. 5, when it is determined that the material property of the material in the target storage area is not in the first matching relationship, it is detected through the material storage area mapping model whether a storage area that matches the material property of the material in the target storage area exists in other storage areas in the intelligent warehousing system, that is, a matching storage area. If the matching storage area is detected, it is determined that the material property of the material in the target storage area matches the storage area property of the non-target storage area. That is, the storage area property of the target storage area and the material property of the material in the target storage area are in the second matching relationship.

Further, when the storage area property of the target storage area and the material property of the material in the target storage area are in the second matching relationship, it indicates that the matching between the storage area and the material in the intelligent warehousing system can be realized by moving the material in the target storage area. In this way, the safety of the property modification can be determined, thereby avoiding the problem of the mismatch between the storage area property and the material property after the storage area property or the material property is modified. Therefore, similar to the determination of the storage area property of the target storage area and the material property of the material in the target storage area being in the first matching relationship, the property-modification-confirmation information is generated after it is determined that the storage area property of the target storage area and the material property of the material in the target storage area are in the second matching relationship, which is used for determining the effectiveness and safety of the subsequent property modification instruction.

On the contrary, if the matching storage area does not exist, that is, the storage area property of the target storage area and the material property of the material in the target storage area are not in the second matching relationship, it indicates that the storage area property of the target storage area or the material property of the material in the target storage area cannot be modified. Otherwise, the problem of the mismatch between the material property and the storage area property is caused. Then step S206 is performed.

In block S206: when the matching storage area does not exist, property modification conflict information is generated, where the property modification conflict information represents that the storage area property of the storage area or the material property of the material in the storage area is unmodifiable.

Optionally, after operation of block S203, the method further includes the following operations.

In block S207: identification information of the matching storage area and identification information of the material in the target storage area are acquired, and carrying indication information is generated according to the identification information of the matching storage area and the identification information of the material in the target storage area, where the carrying indication information indicates that a warehousing robot should carry the material in the target storage area to the matching storage area.

For example, after it is determined that the storage area property of the target storage area and the material property of the material in the target storage area are in the second matching relationship, the material in the target storage area needs to be carried and moved to the matching storage area that matches the material property of the material. Therefore, after it is determined that the storage area property of the target storage area and the material property of the material in the target storage area are in the second matching relationship, the identification information of the matching storage area and the identification information of the material in the target storage area are acquired, and the carrying indication information is generated according to the identification information. The carrying indication information can indicate that a warehousing robot should carry the material in the target storage area to the matching storage area.

In block S208: the carrying indication information to a terminal device is transmitted.

For example, the terminal device may be a warehousing robot or a user terminal device.

In a possible implementation, after the carrying indication information is generated, the carrying indication information is transmitted to the warehousing robot to control the carrying operation of the warehousing robot. In another possible implementation, after the carrying indication information is generated, the carrying indication information is added to the property-modification-confirmation information, so that an executing device using the property-modification-confirmation information can obtain the carrying indication information when the property-modification-confirmation information is transmitted or used. In still another possible implementation, after the carrying indication information is generated, the carrying indication information is transmitted to the user terminal device. The user terminal device generates the property modification instruction according to the carrying indication information, and transmits the property modification instruction to the warehousing system server, so that the warehousing system server can control the warehousing robot to carry the material in the target storage area to the matching storage area after modifying the storage area property or the material property.

In this embodiment, after it is determined that the storage area property of the target storage area and the material property of the material in the target storage area are in the second matching relationship, a material location can be automatically deployed by generating and transmitting the carrying indication information in a case that a mismatch between the target storage area and the corresponding material exists after the property modification, thereby improving the effectiveness and safety of the property modification instruction.

Further, after the property-modification-confirmation information or the property modification conflict information is generated, the subsequent property modification instruction is executed according to the property-modification-confirmation information or the property modification conflict information, or a prompt indicating that the property cannot be modified is transmitted to a user. The process is not described in detail herein again.

Optionally, before the operation of block S201, the method further includes the following operation.

In block S200: material-quality-monitoring information is acquired, where the material-quality-monitoring information is configured to represent a deterioration status of the material under a storage condition of the material, and determine to construct or update the material inventory mapping model according to the material-quality-monitoring information.

For example, a material-quality-monitoring device is further arranged in the intelligent warehousing system, which is configured to monitor a deterioration status of the material and transmit monitoring data to the warehousing system server of the warehouse dispatching center. The monitoring data includes or is used for generating the material-quality-monitoring information. Specifically, the material-quality-monitoring information includes the deterioration status of different materials under a current storage condition. For example, a material A deteriorates in 12 hours under a storage condition a (such as a temperature, a humidity, or tightness). After obtaining the material-quality-monitoring information according to the monitoring data uploaded by the monitoring device, the warehousing system server may determine, according to the material-quality-monitoring information and a historical average duration for which the material is stored in the storage area, the storage conditions matching the different materials. That is to say, the matching relationship between the material property and the storage area property is determined, and then the material inventory mapping model is constructed or updated.

In this embodiment, the material-quality-monitoring information is acquired, and the material inventory mapping model is constructed or updated according to the material-quality-monitoring information, so that the material inventory mapping model can represent the matching relationship between the material property and the storage area property more accurately without manual configuration. In this way, the accuracy of the matching relationship and the overall operating efficiency of the warehousing system are improved.

In this embodiment, the implementations of operation in block S201 to operation in block S202 are the same as the implementations of the corresponding technical contents in operation in block S 101 to operation in block S102 in the embodiment shown in FIG. 2 of this application. The details are not described herein again.

FIG. 6 is a schematic structural diagram of an apparatus for pre-modifying a property of a warehousing system according to an embodiment of this application, applicable to the warehousing system server. As shown in FIG. 6, the apparatus 3 for pre-modifying a property of a warehousing system provided in this embodiment includes:
a detection module 31, configured to detect, according to a material storage area mapping model, whether a storage area property of a storage area matches a material property of a material in the storage area in response to a property pre-modification instruction, where the property pre-modification instruction is configured to test whether the storage area property of the storage area or the material property of the material in the storage area is modifiable; and
a generation module 32, configured to generate property-modification-confirmation information if the storage area property of the storage area matches the material property of the material in the storage area, where the property-modification-confirmation information represents that the storage area property of the storage area or the material property of the material in the storage area is modifiable.

In a possible implementation, the material storage area mapping model includes matching identifier mapping. The detection module 31 is specifically configured to: acquire a storage area property of a target storage area corresponding to the property pre-modification instruction and a material property of a material in the target storage area; determine a first identifier corresponding to the storage area property of the target storage area and a second identifier corresponding to the material property of the material in the target storage area; and determine that the storage area property of the target storage area and the material property of the material in the target storage area are in a first matching relationship if the first identifier and the second identifier satisfy an identifier mapping relationship indicated by predetermined matching identifier mapping, where the matching identifier mapping is configured to represent an identifier mapping relationship between the storage area property and the material property that match each other, and the first matching relationship represents that the storage area property of the target storage area matches the material property of the material in the target storage area.

In a possible implementation, the material storage area mapping model includes matching degree mapping. The detection module 31 is specifically configured to: acquire a storage area property of a target storage area corresponding to the property pre-modification instruction and a material property of a material in the target storage area; determine a matching degree between the storage area property of the target storage area and the material property of the material in the target storage area according to the matching degree mapping; and determine that the storage area property of the target storage area and the material property of the material in the target storage area are in a first matching relationship if the matching degree is greater than a preset threshold, where the first matching relationship represents that the storage area property of the target storage area matches the material property of the material in the target storage area.

In a possible implementation, the detection module 31 is further configured to: detect whether the material property of the material stored in the target storage area has a matching storage area if the storage area property of the target storage area and the material property of the material in the target storage area are not in the first matching relationship; and determine that the storage area property of the target storage area and the material property of the material in the target storage area are in a second matching relationship if the matching storage area exists, where the second matching relationship represents that the material property of the material in the target storage area matches a storage area property of a non-target storage area.

In a possible implementation, after the determining that the storage area property of the target storage area and the material property of the material in the target storage area are in the second matching relationship, the generation module 32 is further configured to: acquire identification information of the matching storage area and identification information of the material in the target storage area; and generate carrying indication information according to the identification information of the matching storage area and the identification information of the material in the target storage area, where the carrying indication information indicates that a warehousing robot should carry the material in the target storage area to the matching storage area.

In a possible implementation, the apparatus for pre-modifying a property of a warehousing system further includes: a transmission module 33, configured to transmit the carrying indication information to a terminal device.

In a possible implementation, the detection module 31 is further configured to: acquire configuration information, where the configuration information is used for representing storage conditions corresponding to materials with different item features; and construct or update the material storage area mapping model according to the configuration information.

In a possible implementation, the detection module 31 is further configured to: acquire material-quality-monitoring information, where the material-quality-monitoring information is used for representing a deterioration status of the material under a storage condition of the material; and determine to construct or update the material inventory mapping model according to the material-quality-monitoring information.

In a possible implementation, the storage area property includes at least one of a storage temperature, a storage humidity, and storage tightness; and the material property includes at least one of an item type, an item quantity, an item material, and an item shelf life.

The detection module 31 and the generation module 32 are connected in sequence. Optionally, the transmission module 33 is connected to the generation module 32. The apparatus 3 for pre-modifying a property of a warehousing system provided in this embodiment may execute the technical solutions of the method embodiments shown in FIG. 2 to FIG. 5. The technical solutions have similar implementation principles and technical effects, and the details are not described herein again.

FIG. 7 is a schematic diagram of an electronic device according to an embodiment of this application. As shown in FIG. 7, the electronic device provided in this embodiment includes a memory 41, a processor 42, and a computer program.

The computer program is stored in the memory 41, and configured to be executed by the processor 42 to implement the method for pre-modifying a property of a warehousing system provided in any of the embodiments corresponding to FIG. 2 to FIG. 5 of this application.

The memory 41 and the processor 42 are connected by a bus 43.

In a possible implementation, the electronic device 4 is a warehousing system server.

Relevant descriptions may be understood by correspondingly referring to the relevant descriptions and effects corresponding to the steps in the embodiments corresponding to FIG. 2 to FIG. 5, and the details are not described herein again.

An embodiment of this application provides a computer-readable storage medium, storing a computer program. The computer program is executed by a processor to implement the method for pre-modifying a property of a warehousing system provided in any of the embodiments corresponding to FIG. 2 to FIG. 5 of this application.

The computer-readable storage medium may be a ROM, a random access memory (RAM), a CD-ROM, a magnetic tape, a floppy disk, an optical data storage device, and the like.

An embodiment of this application provides a computer program product, including a computer program. The computer program is executed by a processor to implement the method for pre-modifying a property of a warehousing system provided in any of the embodiments corresponding to FIG. 2 to FIG. 5 of this application.

In the several embodiments provided in this application, it should be understood that the disclosed apparatus and method may be implemented in other manners. For example, the apparatus embodiments described above are merely exemplary. For example, division of modules is merely logical function division and may be other division manners during actual implementation. For example, a plurality of modules or components may be combined or integrated into another system, or some features may be omitted or not executed. In addition, the displayed or discussed mutual coupling or direct coupling or communication connections may be implemented by some interfaces. The indirect coupling or communication connection between the apparatuses or modules may be electrical, mechanical, or in other forms.

A person skilled in the art can easily figure out other implementations of this application after considering the specification and practicing the application disclosed herein. This application is intended to cover any variations, uses, or adaptive changes of this application. These variations, uses, or adaptive changes follow the general principles of this application and include the common general knowledge or common technical means in the technical field which are not disclosed in this application. The specification and the embodiments are considered as merely exemplary, and the true scope and spirit of this application are indicated by the following claims.

It is to be understood that this application is not limited to the precise structures described above and shown in the accompanying drawings, and various modifications and changes can be made without departing from the scope of this application. The scope of this application is subject only to the appended claims.

## Claims

1. A method for pre-modifying a property of a warehousing system, comprising:
detecting, according to a material storage area mapping model, whether a storage area property of a storage area matches a material property of a material in the storage area in response to a property pre-modification instruction, wherein the property pre-modification instruction is configured to test whether the storage area property of the storage area or the material property of the material in the storage area is modifiable; and
generating property-modification-confirmation information when the storage area property of the storage area matches the material property of the material in the storage area, wherein the property-modification-confirmation information represents that the storage area property of the storage area or the material property of the material in the storage area is modifiable.

2. The method according to claim 1, wherein the material storage area mapping model comprises matching identifier mapping, and the detecting, according to a material storage area mapping model, whether a storage area property of a storage area matches a material property of a material in the storage area comprises:
acquiring a storage area property of a target storage area corresponding to the property pre-modification instruction and a material property of a material in the target storage area;
determining a first identifier corresponding to the storage area property of the target storage area and a second identifier corresponding to the material property of the material in the target storage area; and
determining that the storage area property of the target storage area and the material property of the material in the target storage area are in a first matching relationship when the first identifier and the second identifier satisfy an identifier mapping relationship indicated by predetermined matching identifier mapping, wherein the matching identifier mapping is configured to represent an identifier mapping relationship between the storage area property and the material property that match each other, and the first matching relationship represents that the storage area property of the target storage area matches the material property of the material in the target storage area.

3. The method according to claim 1, wherein the material storage area mapping model comprises matching degree mapping, and the detecting, according to the material storage area mapping model, whether the storage area property of the target storage area matches the material property of the material in the target storage area comprises:
acquiring a storage area property of a target storage area corresponding to the property pre-modification instruction and a material property of a material in the target storage area;
determining a matching degree between the storage area property of the target storage area and the material property of the material in the target storage area according to the matching degree mapping; and
determining that the storage area property of the target storage area and the material property of the material in the target storage area are in a first matching relationship when the matching degree is greater than a preset threshold, wherein the first matching relationship represents that the storage area property of the target storage area matches the material property of the material in the target storage area.

4. The method according to claim 2 or 3, further comprising:
detecting whether the material property of the material stored in the target storage area has a matching storage area when the storage area property of the target storage area and the material property of the material in the target storage area are not in the first matching relationship; and
determining that the storage area property of the target storage area and the material property of the material in the target storage area are in a second matching relationship when the matching storage area exists, wherein the second matching relationship represents that the material property of the material in the target storage area matches a storage area property of a non-target storage area.

5. The method according to claim 4, wherein after the determining that the storage area property of the target storage area and the material property of the material in the target storage area are in the second matching relationship, the method further comprises:
acquiring identification information of the matching storage area and identification information of the material in the target storage area; and
generating carrying indication information according to the identification information of the matching storage area and the identification information of the material in the target storage area, wherein the carrying indication information is configured to indicate a warehousing robot to carry the material in the target storage area to the matching storage area.

6. The method according to claim 5, further comprising:
transmitting the carrying indication information to a terminal device.

7. The method according to claim 1, further comprising:
acquiring configuration information, wherein the configuration information is configured to represent storage conditions corresponding to materials with different item features; and
constructing or updating the material storage area mapping model according to the configuration information.

8. The method according to claim 1, further comprising:
acquiring material-quality-monitoring information, wherein the material-quality-monitoring information is configured to represent a deterioration status of the material under a storage condition of the material; and
determining to construct or update the material inventory mapping model according to the material-quality-monitoring information.

9. The method according to any of claims 1 to 3, wherein
the storage area property comprises at least one of a storage temperature, a storage humidity, and storage tightness; and
the material property comprises at least one of an item type, an item quantity, an item material, and an item shelf life.

10. An apparatus for pre-modifying a property of a warehousing system, the apparatus comprising:
a detection module, configured to detect, according to a material storage area mapping model, whether a storage area property of a storage area matches a material property of a material in the storage area in response to a property pre-modification instruction, wherein the property pre-modification instruction is configured to test whether the storage area property of the storage area or the material property of the material in the storage area is modifiable; and
a generation module, configured to generate property-modification-confirmation information if the storage area property of the storage area matches the material property of the material in the storage area, wherein the property-modification-confirmation information represents that the storage area property of the storage area or the material property of the material in the storage area is modifiable.

11. An electronic device, comprising: a memory, a processor, and a computer program, wherein
the computer program is stored in the memory and configured to be executed by the processor to implement the method for pre-modifying a property of a warehousing system according to any of claims 1 to 9.

12. A computer-readable storage medium, storing computer-executable instructions, the computer-executable instructions, when executed by a processor, being configured to implement the method for pre-modifying a property of a warehousing system according to any of claims 1 to 9.

13. A computer program product, comprising a computer program, the computer program, when executed by a processor, implementing the method for pre-modifying a property of a warehousing system according to any of claims 1 to 9.
